# EUROPÄISCHE PATENTSCHRIFT

(11) **EP 0 787 654 B1**
(45) Veröffentlichungstag und Bekanntmachung des Hinweises auf die Patenterteilung: **10.03.1999**
(21) Anmeldenummer: 96101101.2
(22) Anmeldetag: 26.01.1996
(51) Int. Cl.: B65B 35/54, B65G 47/68

(54) **Verfahren und Vorrichtung zur Überbringung von Flachbeuteln, insbesondere gefüllten, in einer heissgesiegelten Umverpackung befindlichen Doppelkammerteebeuteln, von einer zweibahnigen Verarbeitung zu einer einbahnigen Weiterverarbeitung**
Method and apparatus for transferring filled bags from a transport system with two lanes to a transport system woth one lane
Procédé et dispositif pour transférer des sachets remplis d'un système de transport à deux voies vers un système à une voie

(43) Veröffentlichungstag der Anmeldung: 06.08.1997
(73) Patentinhaber: TEEPACK SPEZIALMASCHINEN GMBH & CO. KG, D-40667 Meerbusch (DE)
(72) Erfinder: Vomberg, Rainer, Dipl.Ing., D-41844 Wegberg (DE)
(74) Vertreter: Stenger, Watzke & Ring Patentanwälte

(56) Entgegenhaltungen:
- DE-A- 1 950 623
- FR-A- 2 267 964
- GB-A- 1 587 715
- GB-A- 2 041 311
- US-A- 3 850 281

## Beschreibung

Die Erfindung betrifft ein Verfahren und eine Vorrichtung zur Überbringung von Flachbeuteln, insbesondere gefüllten, in einer heißgesiegelten Umverpackung befindlichen Doppelkammerteebeuteln, von einer zweibahnigen Verarbeitung zu einer einbahnigen Weiterverarbeitung. Sogenannte Flachbeutel werden in großem Umfange zur Verpackung kleiner Mengen verschiedenster Waren, wie beispielsweise Milchpulver, Kaffee, Kakao, Tabletten, Kaugummi, Bonbons usw. gern gebraucht, da mit ihnen die Gewähr gegeben ist, daß Luft, Licht und Feuchtigkeit von der Einwirkung auf die Ware abgehalten wird. Bei der Verpackung von Tee in Teebeuteln besteht darüber hinaus ein großes Bedürfnis, diese nicht nur gegen die erwähnten Einwirkungen von Luft, Licht und Feuchtigkeit zu schützen, sondern auch eine aromadichte Verpackung vorzusehen. Damit soll vermieden werden, daß die äußeren Lagerbedingungen, wie Lufttemperatur und Luftfeuchte, durch das filterpapierähnliche Vliesmaterial hindurch auf den abgepackten Tee einwirken und dessen Qualität und Aroma im Laufe der Zeit beeinträchtigen.

Es ist bereits vorgeschlagen worden und bekannt, jeden Beutel einzeln vorzugsweise in eine Aluminiumverbundfolienumhüllung einzubringen, die aus einem rechteckigen Materialstreifen besteht, der mittig um die halbe Längsseite einmal gefaltet ist und dessen drei ursprünglich offene Seiten durch Heißsiegeln nach dem Einbringen des Teebeutels dicht verschlossen werden. Hierzu wird eine bekannte Heißsiegelmaschine verwendet, in der die Teebeutel in zweibahniger Arbeitsweise mit der Umverpackung versehen werden und von dort aus zweibahnig weitertransportiert werden. Dabei liegen die versiegelten Beute in Transportrichtung hinter den Siegelwalzen der Maschine in einem Abstand von etwa 100 mm (Vorderkante zu Vorderkante) zueinander auf zwei Transportbahnen und weisen die versiegelten Kopfseiten der Flachbeutel der beiden Bahnen zueinander.

Für die anschließende Weiterverarbeitung ist sowohl die zweibahnige Verarbeitungsweise hinderlich als auch die Tatsache, daß die Flachbeutelköpfe der in den beiden Reihen parallel zueinander angeordneten Flachbeutel gegeneinander weisen.

Aus der FR-A 2 267 964 ist ein Verfahren der eingangs genannten Art bekannt, bei dem Artikel von einer zweibahnigen Verarbeitung zu einer einbahnigen Weiterverarbeitung überführt werden, wobei die Gegenstände während der zweibahnigen Verarbeitung auf der einen Bahn versetzt zu den Gegenständen auf der anderen Bahn zueinander angeordnet sind und abwechselnd mittels einer nach Art einer Weiche arbeitenden Überführvorrichtung in die einbahnige Weiterverarbeitung überführt werden.

Der Erfindung liegt angesichts dieses Standes der Technik die **Aufgabe** zugrunde, ein Verfahren und eine Vorrichtung zu entwickeln, die es ermöglichen, die zweibahnig mit ihren Kopfseiten gegeneinander gerichtet angelieferten Flachbeutel zu einer einreihigen Weiterverarbeitung, mit dem Flachbeutelkopf nach vorne in Transportrichtung gerichtet, anzuordnen und einer Verpackungseinheit, wie beispielsweise einer Einschachtelung, zuzuführen, wobei in der vorzugsweise vorgesehenen Anwendung an der Weiterverarbeitung von Dreiseiten-Heißsiegel-Teebeuteln sichergestellt sein soll, daß eine Koordination mit einer schnellaufenden einbahnigen Teebeutelpackmaschine mit einer Taktzahl von bis zu 400 Beuteln pro Minute und mehr funktionssicher und in technisch einfacher und preiswerter Weise ermöglicht ist.

Die Aufgabe ist an einem Verfahren der eingangs genannten Art erfindungsgemäß dadurch gelöst, daß die Flachbeutel auf den beiden Bahnen der zweibahnigen Verarbeitung zunächst mit gegeneinander weisenden Flachbeutelköpfen in Längsachsen- und quer parallel Anordnung positioniert sind, daß sodann die Flachbeutel der beiden Bahnen gegeneinander versetzt und auf Lücke gebracht werden, und daß schließlich die Flachbeutel in einer kombinierten Verschiebe- und Verschwenkbewegung von der jeweiligen Bahn der zweibahnigen Verarbeitung in die einbahnige Weiterverarbeitung entlang einer Mittelachse mit gleichsinnig nach vorn in Transportrichtung weisenden Flachbeutelköpfen uberführt und weiterverarbeitet werden. Dabei wird durch das Versetzen der Flachbeutel in den beiden Bahnen zueinander der reihenmäßige Abstand gegeneinander verdoppelt, womit die Möglichkeit geschaffen wird, jeden Flachbeutel einzeln zu handhaben, ohne daß die eng gepackte Anlieferung gestört wird. Auf diese Weise können die Flachbeutel in den beiden Bahnen einzeln abwechselnd in einer kombinierten Verschiebe- und Verschwenkbewegung nach innen in eine Mittelposition verbracht werden, wobei die Verschwenkbewegung sicherstellt, daß die bis dahin gegeneinander gerichteten Flachbeutelköpfe nunmehr eine gleiche Ausrichtung vorzugsweise mit der Kopfseite nach vorn in Transportrichtung erfahren. Nachdem auf diese Weise eine einbahnige Reihe exakt hintereinander mit gleichen Abständen positionierter Flachbeutel mit identischer Kopfausrichtung in der Reihe gebildet worden ist, kann in einfacher Weise die Weiterverarbeitung, beispielsweise die Einschachtelung, vorgenommen werden.

Gemäß einer bevorzugten Ausführungsform des erfindungsgemäßen Verfahrens in der Anwendung an Teebeuteln mit heißgesiegelter Umverpackung werden die zunächst parallel nebeneinander mit gegeneinander weisenden Flachbeutelköpfen angeordneten Flachbeutel auf den beiden Bahnen der zweibahnigen Verarbeitung mit gleicher Verarbeitungsgeschwindigkeit transportiert. In der ersten Verfahrensstufe werden die Flachbeutel der beiden Bahnen vorteilhafterweise durch eine versetzt an den beiden Bahnen angreifende Beschleunigungsstrecke um eine Teilung gegeneinander versetzt und auf Lücke gebracht. In der zweiten Verfahrensstufe werden sodann die Flachbeutel erfindungsgemäß durch die kombinierte Verschiebe- und Verschwenkbewegung in die Mittelachse einreihig hintereinander angeordnet und mit gleichsinnig nach vorne in Transportrichtung weisenden Flachbeutelköpfen weiterverarbeitet. Die Verschwenkung der Flachbeutel wird vorzugsweise um 90° vorgenommen.

Um die kombinierte Verschiebe -und Verschwenkbewegung exakt durchführen zu können, wird in zweckmäßiger Ausgestaltung der Erfindung vorgeschlagen, die Flachbeutel in ihrer Position vor Einleitung dieser Bewegung auf beiden Bahnen zu justieren. Dies ermöglicht es unter anderem dann auch, in Weiterbildung der Erfindung den Flachbeuteln mit der Ausführung der Verschiebe- und Verschwenkbewegung eine derart hohe Beschleunigung zu erteilen, daß die Bewegungsenergie ausreicht, die Flachbeutel ohne weitere Transportmittel, vorzugsweise geführt, zu der nachfolgenden Verarbeitungsstation zu verbringen.

In der konkreten Ausgestaltung des erfindungsgemäßen Verfahrens ist vorgesehen, die Flachbeutel in der zweibahnigen Verarbeitung mit einer Geschwindigkeit von etwa 20 Meter pro Minute zu transportieren, sie sodann in der Beschleunigungsstrecke mit etwa 40 Meter pro Minute gegeneinander zu versetzen und schließlich die kombinierte Verschiebe- und Verschwenkbewegung mit einer Drehzahl von 100 min^{-1,} abhängig von der Taktzahl der Anlieferung durchzuführen. In Abhängigkeit von dem Gewicht der verpackten Ware kann es vorteilhaft sein, die Bewegung der Flachbeutel in der einbahnigen Weiterverarbeitungsstrecke mit Druckluft und/oder einer mechanischen Transporthilfe zu unterstützen.

Die erfindungsgemäße Vorrichtung zur Durchführung des eingangs genannten Verfahrens ist mit einer Transporteinrichtung mit zwei Bahnen als Sortierstrecke für die Flachbeutel und einer einbahnigen Weiterverarbeitungseinrichtung sowie einer zwischen diesen angeordneten Überführeinrichtung ausgestattet und dadurch gekennzeichnet, daß an jeder Bahn koaxial eine Vorrichtung zum Versetzen der Flachbeutel auf den Bahnen zueinander angeordnet ist und daß sich hieran anschließend eine Überführeinrichtung für jede Bahn zum kombinierten Verschieben und Verschwenken der Flachbeutel in eine Mittelposition mit einer Mittelachse vorgesehen ist. Dabei besteht die Vorrichtung zum Versetzen vorzugsweise aus einem an jeder Bahn angeordneten Zahnriemen oder dgl. beuteltragendem Transportmittel mit beutelerfassenden Mitnehmern, wobei die Zahnriemen etwa doppelt so schnell angetrieben sind wie die vorgeordnete zweibahnige Transporteinrichtung, um eine Beschleunigungsstrecke zu bilden, und wobei die Zahnriemen der beiden Bahnen um eine Teilung versetzt zueinander mit ihren Mitnehmern die Flachbeutel erfassen. Vorzugsweise sind jeweils zwei Zahnriemen pro Bahn vorgesehen, die eine Beutelauflage bilden und mit hochstehenden Mitnehmer ausgerüstet sind. Die Zahnriemen sind endlos geführt und zweckmäßigerweise über einen gemeinsamen Maschinenantrieb angetrieben, der auch für den Antrieb der zweibahnigen Transporteinrichtung vorgesehen ist.

Durch den Geschwindigkeitsbereich von 0 - 400 Beutel/min und höher erweist es sich als vorteilhaft, am Ende der zweibahnigen Verarbeitung einen Anschlag zur Justierung der Position der Flachbeutel vor Einleitung der kombinierten Verschiebe- und Verschwenkbewegung vorzusehen, der nach unten taktgesteuert wegschwenkbar ist.

Die Einrichtung zum kombinierten Verschieben und Verschwenken der Flachbeutel besteht vorzugsweise aus zwei gegenläufigen, jeweils zwei-armigen Rotoren, deren Arme ineinandergreifen und an ihren äußeren Enden mit einer Flachbeutelaufnahme versehen sind, in der der angelieferte Flachbeutel gehalten und nach der kombinierten Verschiebe- und Verschwenkbewegung wieder freigegeben wird. Hierbei sind die Rotoren geringfügig oberhalb eines Rotortisches angeordnet, der sich in der Beuteltransportebene befindet, wobei ein gemeinsamer Rotorantrieb vorgesehen ist, der mit dem Maschinenhauptantrieb gekoppelt ist, um eine Koordination mit dem Maschinentakt in einfacher Weise herbeiführen zu können.

Die Flachbeutelaufnahme an jedem äußeren Ende jedes Rotorarms besteht in der bevorzugten Ausgestaltung aus einem drehgelenkig befestigten L-Winkelstück mit vier Mitnehmerstiften zur Erfassung der Außen- und Rückseite des Flachbeutels, wobei an dem die Rückseite erfassenden Schenkel des L-Winkels eine Schubstange gelenkig befestigt ist, die über eine Schwinge und eine Kurvenrolle mit einer Kurvenscheibe des Rotors zur Erzielung einer Parallelführung der Mitnehmer verbunden ist. Die Parallelführung erstreckt sich etwa 15° vor bis 15° nach der Achsmitte der Rotoren. Mit dieser Ausführungsform ist gewährleistet, daß die Rotoren kontinuierlich durchlaufen können und kein Zwang besteht, an der Abgabestelle des Beutels eine Stopfunktion vorzusehen. Vielmehr wird als besonderer Vorteil bei dieser Ausführung erreicht, daß bei der Drehung der Mitnehmer nach der Achsmitte der verschwenkte Flachbeutel eine Zusatzbeschleunigung erfährt, die dem Ausstoß und dem Weitertransport zugute kommt.

Für den Weitertransport der Flachbeutel zur Verpackungsstation ist vorteilhafterweise eine Schachtführung vorgesehen, wobei oberhalb des Schachtes, Umlenkfinger in den Schacht und insbesondere bei sehr leichten Beuteln, eine Drucklufteinrichtung als Transporthilfe oder zur Beeinflussung der Bewegungsrichtung vorgesehen sein kann. Für schwere Beutel kann alternativ oder zusätzlich unterhalb des Schachtes eine mechanische Transporteinheit vorgesehen sein.

Weitere Einzelheiten, Merkmale und Vorteile des Gegenstandes der Erfindung ergeben sich aus der nachfolgenden Beschreibung der zugehörigen Zeichnung, in der ein erfindungsgemäßes Ausführungsbeispiel zur Überbringung von Flachbeuteln von einer zweibahnigen Verarbeitung zu einer einbahnigen Weiterverarbeitung in verschiedenen Ansichten schematisch dargestellt ist. In der Zeichnung zeigt:
- Fig. 1: eine Seiten-Gesamtansicht einer Vereinzelungsanlage für Flachbeutel, schematisch,
- Fig. 2: eine Draufsicht auf die Vereinzelungsanlage der Fig. 1,
- Fig. 3: den aus einer Vorrichtung zum Versetzen der Flachbeutel auf den beiden Bahnen zueinander und der Einrichtung zum kombinierten Verschieben und Verschwenken der Flachbeutel in eine Mittelposition bestehenden Teil der Anlage der Fig. 1 und 2 in einer Seitenschnittansicht,
- Fig. 4: den Anlagenteil der Fig. 3 in Draufsicht,
- Fig. 5: einen Rotor der Einrichtung zum kombinierten Verschieben und Verschwenken in Draufsicht und
- Fig. 6: einen gesteuerten Anschlag für die Flachbeutel am Ende der zweibahnigen Verarbeitung in Seitenschnittansicht.

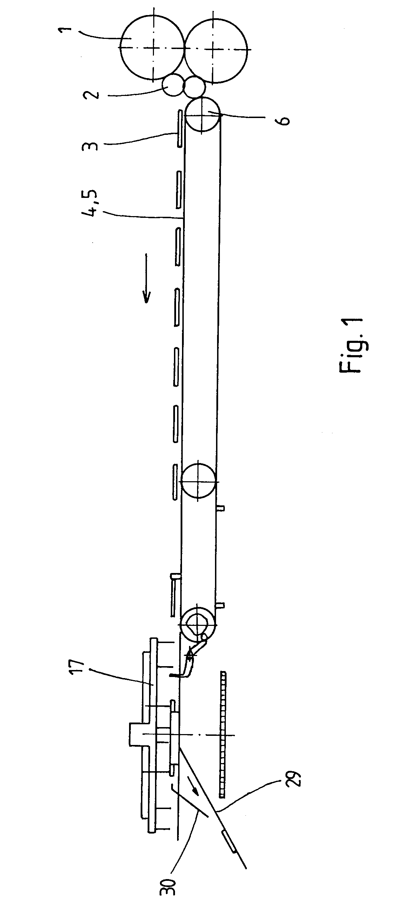

Die dargestellte Anlage betrifft in ihrer Sachgesamtheit den an einer nicht dargestellte Teebeutelpackmaschine angeschlossenen Vorrichtungsteil, der zur Erstellung einer heißgesiegelten Umverpackung um jeden einzelnen gefüllten Doppelkammerteebeutel vorgesehen ist. In Fig. 1 der Zeichnung sind aus diesem Anlageteil noch Siegel- und Schneidwalzen 1 dargestellt, hinter denen sich in Transportrichtung gemäß Pfeil die Vereinzelungsanlage der Erfindung anschließt. In der Heißsiegelungsmaschine, die die Folienumverpackung für die Doppelkammerteebeutel herstellt, findet eine zweibahnige Verarbeitung statt. Über eine Übergabeeinrichtung 2 gelangen die derart hergestellten Flachbeutel 3 auf zwei parallel zueinander angeordnete Transportbahnen 4, 5 der zweibahnigen Verarbeitung. Die Transportbahnen 4, 5 sind über Antriebswalzen 6 angetrieben, die wiederum in Verbindung stehen mit dem gemeinsamen Maschinen-Hauptantrieb.

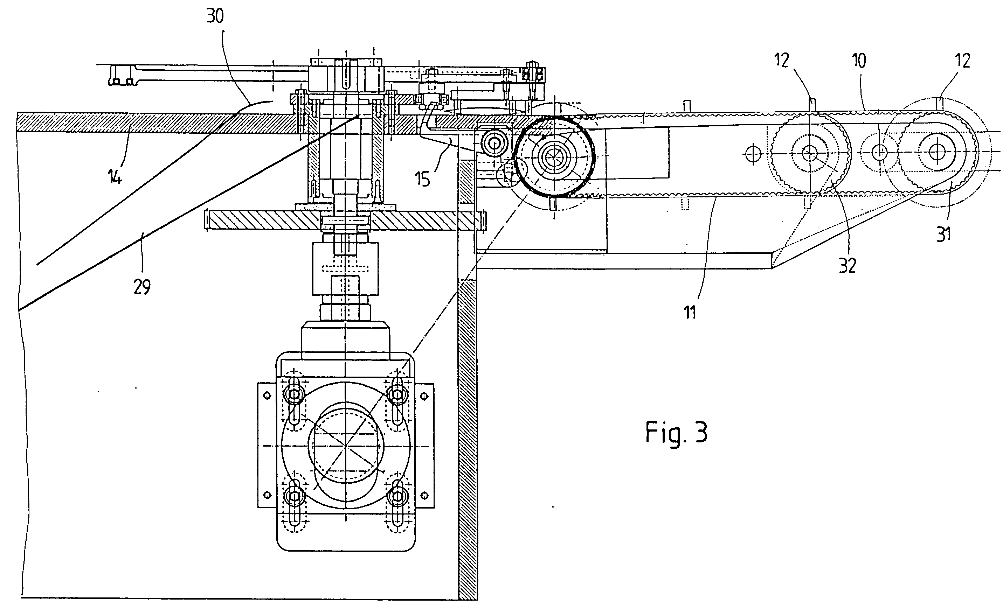

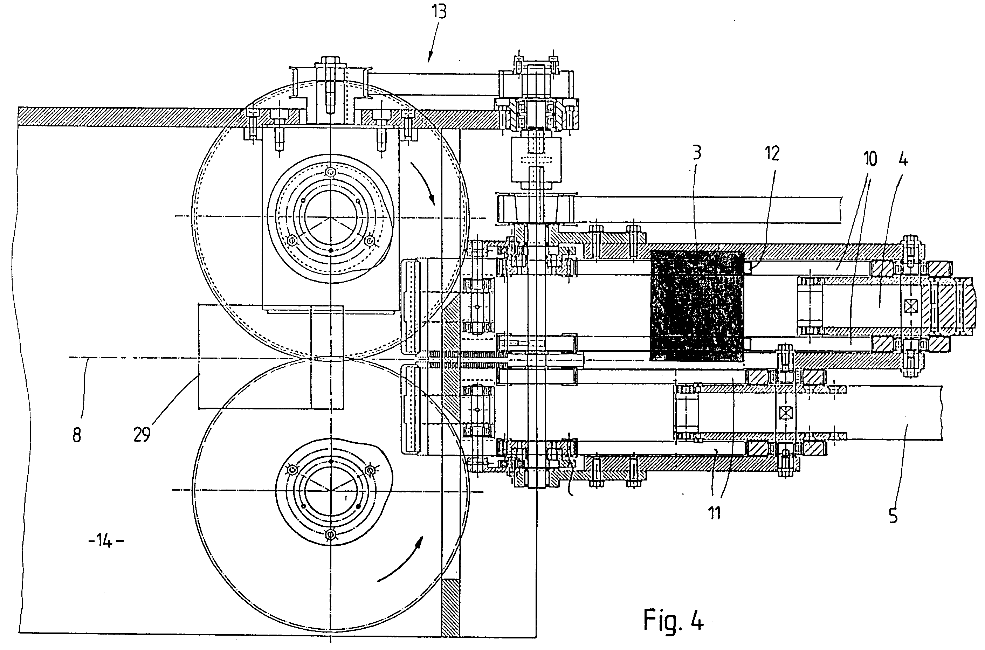

Als Transportbahnen 4, 5 können Flachriemen, Zahnriemen oder Ketten mit Mitnehmernocken oder dgl. verwendet werden, die in seitlichen Führungen zwecks Erhöhung der Sicherheit der Positionierung der Flachbeutel laufen. Diese sind genau positioniert und weisen im Ausführungsbeispiel einen Abstand von 100 mm zueinander (Vorderkante zu Vorderkante) auf. Aufgrund der Funktion der Folienumverpackungsmaschine weisen dabei die versiegelten Kopfseiten der Flachbeutel 3 zueinander. Jeder Flachbeutelkopf 7 ist damit benachbart zur Mittelachse 8 hin gerichtet angeordnet. Die Bewegungsgeschwindigkeit v₁ der Transportbahnen 4, 5 beträgt in der zweibahnigen Verarbeitung im Ausführungsbeispiel 20 m/min. An die beschriebene zweibahnige Transporteinrichtung, die auch als Sortierstrecke für die Flachbeutel Verwendung finden kann, befinden sich diese in längsachsen- und querachsenparalleler Anordnung. Im sich in Transportrichtung gemäß Pfeil anschließenden Anlagenteil werden die Abstände zwischen den einzelnen Flachbeuteln, auch Teilung genannt, vergrößert, um eine ungestörte Einzelhandhabung der Flachbeutel im weiteren Verfahren zu ermöglichen. Hierzu ist eine Beschleunigungsstrecke 9 vorhanden, in der die Flachbeutel 3 mit der zweifachen Geschwindigkeit v₁, nämlich 40 m/min, weiterhin zweibahnig vorwärts bewegt werden. Der Aufbau der Beschleunigungsstrecke 9 ist detailliert den Figuren 3 und 4 der Zeichnung entnehmbar, auf die nachfolgend Bezug genommen wird.

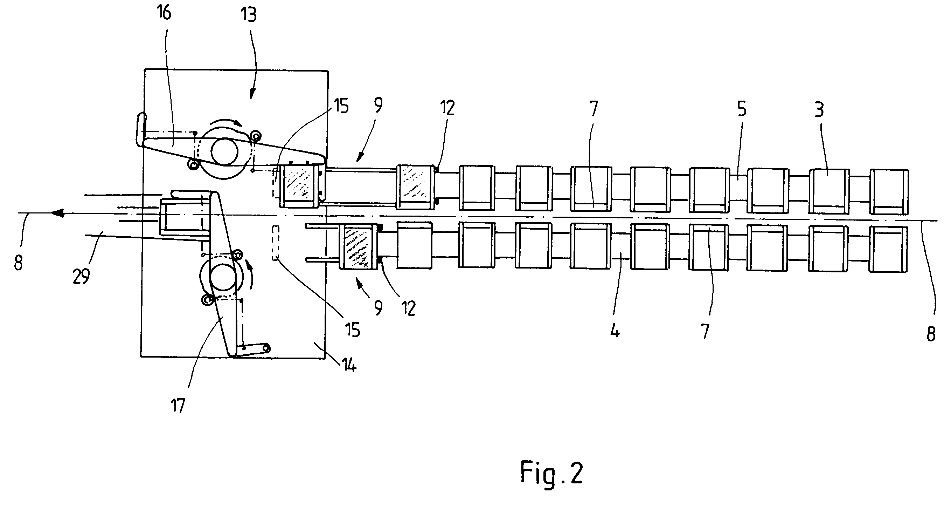

Insbesondere aus Fig. 4 ist erkennbar, daß im Endbereich der beiden Transportbahnen 4, 5 Zahnriemen 10 für die Bahn 4 und 11 für die Bahn 5 außerhalb der Transportbahnen in Fortsetzung der Bewegungsbahn der Flachbeutel 3 angeordnet sind, wobei von den Zahnriemen 10 bzw. 11 hochstehende Mitnehmer 12 die aufliegenden Flachbeutel 3 erfassen und in Transportrichtung vorwärtsbewegen. Dabei ist die Zahnriemenanordnung an der Transportbahn 5 um eine Teilung in Transportrichtung nach vorn versetzt, so daß deren Mitnehmer die dort auf der zweiten Bahn ankommenden Flachbeutel 3 später erfassen. In Verbindung mit der doppelten Antriebsgeschwindigkeit von 40 m/min werden hierdurch die Flachbeutel 3 auf den beiden Bahnen wechselseitig auf doppelten Abstand gebracht und befinden sich in einer Anordnung versetzt zueinander, wie Fig. 2 der Zeichnung durch die schraffierte Hervorhebung der versetzten Flachbeutel 3 entnehmbar ist.

Die Zahnriemen 10, 11 sind über Zahnriemenscheiben 31, 32 geführt, die über den gemeinsamen Maschinenantrieb angetrieben sind.

Durch die in der Beschleunigungsstrecke 9 erzielte Versetzung der Flachbeutel 3 in den beiden Bahnen 4, 5 zueinander und durch die Verdopplung des Abstandes der Flachbeutel 3 in koaxialer Reihe untereinander wird eine Vereinzelung erzielt, die es der sich in Transportrichtung anschließenden Einrichtung zum kombinierten Verschieben und Verschwenken 13 der Flachbeutel 3 ermöglicht, jeden Flachbeutel 3 einzeln zu erfassen und in der nachfolgend beschriebenen Weise in eine Mittelposition in der Mittelachse 8 zu verbringen.

Die Einrichtung 13 zum kombinierten Verschieben und Verschwenken der Flachbeutel 3 weist einen Rotortisch 14 auf, auf dem die Flachbeutel von den Zahnriemen 10 bzw. 11 der beiden Transportbahnen abwechselnd an einem Anschlag 15 abgelegt werden. Oberhalb des Rotortisches 14 ist für jede Transportbahn ein zweiarmiger Rotor 16, 17 angeordnet, wobei die beiden Rotoren 16 und 17 gegenläufig in der aus Fig. 2 der Zeichnung entnehmbaren Pfeilrichtung kontinuierlich bewegt werden. Die zweiarmigen Rotoren 16, 17 sind ausgelegt, die angelieferten Flachbeutel 3 aufzunehmen und in einer kombinierten Verschiebe- und Verschwenkbewegung in eine Mittelposition zu verbringen, die auf der Mittelachse 8 der Anlage liegt. Dabei wird durch das Verschwenken auf einer Kreisbahn jeder Flachbeutel 3 derart positioniert, daß in der Mittelposition der Flachbeutelkopf 7 in Transportrichtung nach vorn gerichtet ist. Der Winkel zwischen der Aufnahme und Abgabe der Flachbeutel durch jeden Rotor 16, 17 beträgt neunzig Grad, woraus sich unter Berücksichtigung der vorhandenen vier Rotorarme ergibt, daß sich jeder Rotor nur mit 100 min⁻¹ drehen muß, um die gesamte angelieferte Zahl der Flachbeutel 3 im Maschinentakt von der zweibahnigen Verarbeitung in eine einbahnige Verarbeitung überführen zu können.

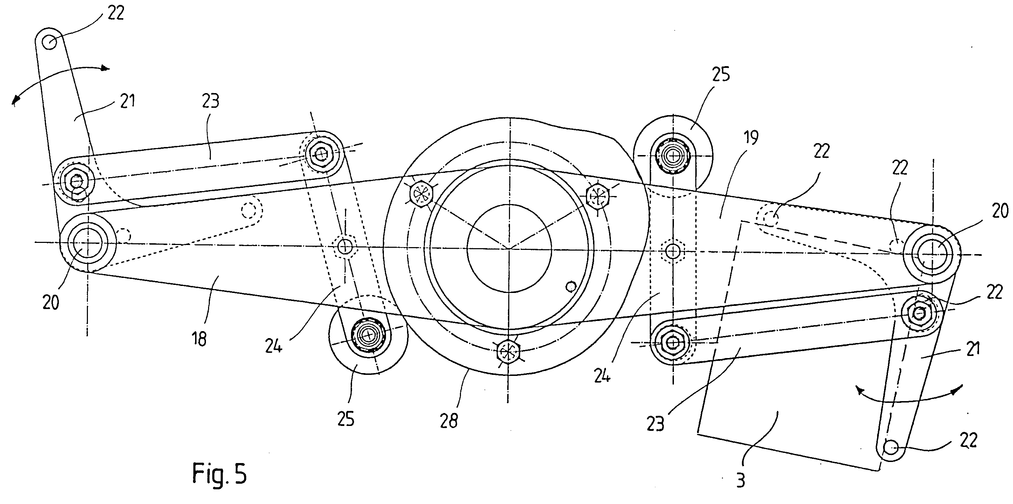

Grundsätzlich stehen verschiedene technische Mittel zur Wahl, die Rotoren mit Aufnahme- und Abgabeeinrichtungen für die Flachbeutel auszurüsten. Beispielsweise können Saugnäpfe oder Mitnehmer angewendet werden. Im nachfolgend beschriebenen Ausführungsbeispiel gemäß Fig. 5 der Zeichnung sind Mitnehmer angewandt worden, um auch bei höheren Geschwindigkeiten eine sichere Erfassung, Führung und Abgabe der Flachbeutel 3 bei der kombinierten Verschiebe- und Verschwenkbewegung zu gewährleisten. Gemäß Fig. 5 der Zeichnung ist jeder Rotor mit zwei Armen 18, 19 ausgerüstet, an deren freien Enden Drehgelenke 20 angeordnet sind. Die Drehgelenke 20 tragen im wesentlichen L-förmige Winkelstücke 21, die an vorgegebenen, für die Halterung der Flachbeutel 3 günstigsten Positionen jeweils vier Mitnehmerstifte 22 tragen. Zeichnerisch ist am Rotorarm 19 in Fig. 5 der Zeichnung verdeutlicht, daß der Flachbeutel 3 in dem L-Winkelstück mit zwei Seiten an den Mitnehmerstiften 22 zur Anlage kommt und hierdurch sicher zur Durchführung der Verschiebe- und Verschwenkbewegung gehalten ist. Durch eine ausgeklügelte Kinetik mit einer am Winkelstück 21 angelenkten Schubstange 23 und einer an deren anderen Ende angelenkten, mittig am Rotorarm gelenkig gehaltenen Schwinge 24 und einer an deren freien Ende befestigten Kurvenrolle 25, die über eine feststehende Kurvenscheibe 28 gesteuert ist, wird eine "Parallelführung" der Mitnehmer über der Abgabestelle erzielt. Hierdurch können die Rotoren kontinuierlich bewegt werden. Die Parallelführung erstreckt sich ca. 15° vor bis 15° nach der Achsmitte der Rotoren. Bei der Drehung der Mitnehmerstifte 22 nach der Achsmitte erfährt der Flachbeutel 3 eine Zusatzbeschleunigung, die dem Ausstoß zugute kommt.

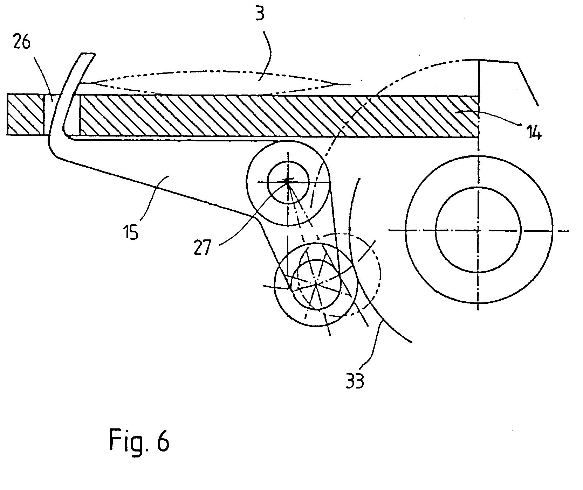

Fig. 6 der Zeichnung zeigt den bereits oben kurz erwähnten Anschlag 15, der durch eine Ausnehmung 26 von unten durch den Rotortisch 14 hindurchragt und um einen Drehpunkt 27, gesteuert von einer Kurvenscheibe 33 nach unten aus dem Bewegungsweg des Flachbeutels 3 heraus wegschwenkbar ist. Durch den hohen Geschwindigkeitsbereich von 0 bis > 400 Beutel pro Minute ist die Anwendung eines Anschlags für die Positionierung der Flachbeutel 3 zur gesicherten Aufnahme durch die Rotorarme vorteilhaft. Der Anschlag 15 wird über die Kurvenscheibe 33 derart gesteuert, daß nach Erreichen der Aufnahmeposition des Flachbeutels der Anschlag 15 wegtaucht und damit die Mitnehmerstifte 22 des ankommenden Rotorarms den Flachbeutel aufnehmen und bis zur Abgabestelle verschieben und verschwenken können. An der Abgabestelle ist gemäß Fig. 1 der Zeichnung ein Schacht 29 schräg oder im Bogen nach unten verlaufend angeordnet, in den der Flachbeutel 3 vom Rotorarm abgegeben wird. Zur Unterstützung und Führung der Bewegung ist oberhalb des Schachtes 29 eine Führung 30 angeordnet. Es kann auch vorgesehen sein, insbesondere bei leichten Beuteln, Druckluft als Transporthilfe und/oder zur Beeinflussung der Bewegungsrichtung zu benutzen. Außerdem kann auch unterhalb des Schachtes eine mechanische Transporthilfe vorgesehen werden. Im Ausführungsbeispiel ist nur die Führung 30 vorhanden, die aus parallel verlaufenden Stegen besteht, die im oberen Bereich den Beuteln entgegengebogen sind.

### Bezugszeichenliste

- 1: Siegel- und Schneidwalzen
- 2: Übernahme- und Trenneinrichtung
- 3: Flachbeutel
- 4: Flachriemen bzw. Bahn
- 5: Flachriemen bzw. Bahn
- 6: Antriebswalzen
- 7: Flachbeutelkopf
- 8: Mittelachse
- 9: Beschleunigungsstrecke
- 10: Zahnriemen
- 11: Zahnriemen
- 12: Mitnehmer
- 13: Einrichtung zum kombinierten Verschieben und Verschwenken
- 14: Rotortisch
- 15: Anschlag
- 16: Rotor
- 17: Rotor
- 18: Rotorarm
- 19: Rotorarm
- 20: Drehgelenk
- 21: Winkelstücke
- 22: Mitnehmerstifte
- 23: Schubstange
- 24: Schwinge
- 25: Kurvenrolle
- 26: Ausnehmung
- 27: Drehpunkt
- 28: Kurvenscheibe
- 29: Schacht
- 30: Führung
- 31: Zahnriemenscheibe
- 32: Zahnriemenscheibe
- 33: Kurvenscheibe

## Patentansprüche

1. Verfahren zur Überbringung von Flachbeuteln (3), insbesondere gefüllten, in einer heißgesiegelten Umverpackung befindlichen Doppelkammerteebeuteln, von einer zweibahnigen Verarbeitung zu einer einbahnigen Weiterverarbeitung, bei dem die Flachbeutel (3) während der zweibahnigen Verarbeitung versetzt zueinander angeordnet sind und abwechselnd in die einbahnige Weiterverarbeitung überführt werden,
**dadurch gekennzeichnet,**
daß die Flachbeutel (3) auf den beiden Bahnen (4, 5) der zweibahnigen Verarbeitung zunächst mit gegeneinander weisenden Flachbeutelköpfen (7) im Längsachsen- und quer paralleler Anordnung positioniert sind, daß sodann die Flachbeutel (3) der beiden Bahnen (4, 5) gegeneinander versetzt und auf Lücke gebracht werden, und daß schließlich die Flachbeutel (3) in einer kombinierten Verschiebe- und Verschwenkbewegung von der jeweiligen Bahn (4, 5) der zweibahnigen Verarbeitung in die einbahnige Weiterverarbeitung entlang einer Mittelachse (8) mit gleichsinnig nach vorn in Transportrichtung weisenden Flachbeutelköpfen (7) überführt und weiterverarbeitet werden.

2. Verfahren nach Anspruch 1, dadurch gekennzeichnet, daß die Flachbeutel (3) auf den beiden Bahnen (4, 5) der zweibahnigen Verarbeitung mit gleicher Verarbeitungsgeschwindigkeit (v₁) transportiert werden und daß sodann die Flachbeutel (3) der beiden Bahnen (4, 5) durch eine versetzt an den beiden Bahnen (4, 5) angreifende Beschleunigungsstrecke (9) um eine Teilung gegeneinander versetzt und auf Lücke gebracht werden.

3. Verfahren nach Anspruch 2, dadurch gekennzeichnet, daß die Transportgeschwindigkeit (v₂) in der Beschleunigungsstrecke (9) doppelt so hoch wie die Anlieferungsgeschwindigkeit (v₁) eingestellt wird.

4. Verfahren nach einem der Ansprüche 1 bis 3, dadurch gekennzeichnet, daß eine Verschwenkung der Flachbeutel (3) um 90° vorgenommen wird.

5. Verfahren nach einem der Ansprüche 1 bis 4, dadurch gekennzeichnet, daß die Flachbeutel (3) in ihrer Position vor Einleitung der kombinierten Verschiebe- und Verschwenkbewegung auf beiden Bahnen (4, 5) justiert werden .

6. Verfahren nach einem der Ansprüche 1 bis 5, dadurch gekennzeichnet, daß mit der Ausführung der Verschiebe- und Verschwenkbewegung den Flachbeuteln (3) eine derart hohe Beschleunigung erteilt wird, daß die Bewegungsenergie ausreicht, die Flachbeutel (3) ohne weitere Transportmittel, insbesondere geführt zur nachfolgenden Verarbeitungsstation zu verbringen.

7. Verfahren nach einem der Ansprüche 1 bis 6, dadurch gekennzeichnet, daß die Flachbeutel (3) in der zweibahnigen Verarbeitung mit einer Geschwindigkeit v₁ transportiert werden, daß sie in der Beschleunigungsstrecke (9) mit 2 x v₁ gegeneinander versetzt werden und daß die kombinierte Verschiebe- und Verschwenkbewegung nur mit einer Drehgeschwindigkeit von 1/4 des Maschinentaktes durchgeführt wird.

8. Verfahren nach einem der Ansprüche 1 bis 7, dadurch gekennzeichnet, daß die Bewegung der Flachbeutel (3) in der einbahnigen Weiterverarbeitungsstrecke mit Druckluft und/oder einer mechanischen Transporthilfe unterstützt wird.

9. Vorrichtung zur Durchführung des Verfahrens nach einem der Ansprüche 1 bis 8 mit einer Transporteinrichtung mit zwei Bahnen (4,5) als Sortierstrecke für die Flachbeutel (3) und einer einbahnigen Weiterverarbeitung sowie einer zwischen diesen angeordneten Überführeinrichtung, dadurch gekennzeichnet, daß an jeder Bahn (4,5) koaxial eine Vorrichtung zum Versetzen der Flachbeutel (3) auf den Bahnen (4,5) zueinander angeordnet ist und daß sich hieran anschließend eine Überführeinrichtung (13) für jede Bahn (4,5) zum kombinierten Verschieben und Verschwenken der Flachbeutel (3) in eine Mittelposition mit einer Mittelachse (8) vorgesehen ist.

10. Vorrichtung nach Anspruch 9, **dadurch gekennzeichnet**, daß die Vorrichtung zum Versetzen aus mindestens einem an jeder Bahn (4, 5) angeordneten Zahnriemen (10, 11) oder dgl. beuteltragendem Transportmittel besteht, daß die Zahnriemen (10, 11) etwa doppelt so schnell angetrieben sind wie die vorgeordnete zweibahnige Transporteinrichtung, um eine Beschleunigungsstrecke (9) zu bilden, und daß die Zahnriemen (10, 11) der beiden Bahnen (4, 5) um eine Teilung versetzt zueinander die Flachbeutel (3) erfassen.

11. Vorrichtung nach Anspruch 10, **dadurch gekennzeichnet**, daß die Zahnriemen (10, 11) oder dgl. beuteltragenden Transportmittel mit beutelerfassenden Mitnehmern (12) ausgerüstet sind.

12. Vorrichtung nach Anspruch 10 und 11, **gekennzeichnet durch** jeweils zwei Zahnriemen (10, 11) für jede Bahn (4, 5), die derart angeordnet sind, daß sie eine Beutelauflage bilden, wobei sie mit hochstehenden Mitnehmernocken (12) zur Erfassung der Flachbeutel (3) versehen sind.

13. Vorrichtung nach einem der Ansprüche 10 bis 12, **gekennzeichnet durch** einen Anschlag (15) am Ende der Beschleunigungsstrecke zur Justierung der Position der Flachbeutel (3) vor Einleitung der kombinierten Verschiebe- und Verschwenkbewegung, der aus dem Bewegungsweg der Einrichtung (13) zum kombinierten Verschieben und Verschwenken nach unten wegschwenkbar ist.

14. Vorrichtung nach einem der Ansprüche 9 bis 13, **dadurch gekennzeichnet**, daß die Einrichtung (13) zum kombinierten Verschieben und Verschwenken aus zwei jeweils zweiarmigen, gegenläufig angetriebenen Rotoren (16, 17) besteht, deren Arme ineinandergreifen und an ihren äußeren Enden mit einer Flachbeutelaufnahme versehen sind, in der der angelieferte Flachbeutel (3) gehalten und nach der kombinierten Verschiebe- und Verschwenkbewegung wieder freigebbar ist.

15. Vorrichtung nach Anspruch 14, **dadurch gekennzeichnet**, daß die Rotoren (16, 17) geringfügig oberhalb eines Rotortisches (14) angeordnet sind, der sich in der Beuteltransportebene befindet, wobei ein gemeinsamer Rotorantrieb vorgesehen ist, der mit dem Maschinenhauptantrieb gekoppelt ist.

16. Vorrichtung nach Anspruch 14 oder 15, **dadurch gekennzeichnet**, daß die Flachbeutelaufnahme an jedem äußeren Ende jedes Rotorarms (18, 19) aus einem drehgelenkig befestigten L-Winkelstück (21) mit vier Mitnehmerstiften (22) zur Erfassung der Außen- und Rückseite des Flachbeutels (3) besteht, wobei an dem die Rückseite erfassenden Schenkel des L-Winkelstücks (21) eine Schubstange (23) gelenkig befestigt ist, die über eine Schwinge (24) und eine Kurvenrolle (25) mit einer Kurvenscheibe (28) des Rotors (16, 17) zur Erzielung einer Parallelführung der Mitnehmer verbunden ist.

17. Vorrichtung nach Anspruch 16, **dadurch gekennzeichnet**, daß sich die Parallelführung von etwa 15° vor bis 15° nach der Achsmitte der Rotoren (16, 17) erstreckt.

18. Vorrichtung nach einem der Ansprüche 9 bis 17, **dadurch gekennzeichnet**, daß für den Weitertransport der Flachbeutel (3), vorzugsweise zu einer Verpackungsstation, eine Schachtführung (29) vorgesehen ist.

19. Vorrichtung nach Anspruch 18, **gekennzeichnet durch** eine Drucklufteinrichtung als zusätzliche Transporthilfe.

20. Vorrichtung nach Anspruch 18 oder 19, **dadurch gekennzeichnet**, daß unterhalb des Schachtes (29) eine zusätzliche mechanische Transporteinheit vorgesehen ist.

21. Vorrichtung nach einem der Ansprüche 17 bis 20, **dadurch gekennzeichnet**, daß oberhalb des Schachtes (29) eine Führung (30) vorgesehen ist, die aus parallelverlaufenden Stegen besteht, die im oberen Bereich den angelieferten Flachbeuteln (3) entgegengebogen sind.

## Claims

1. Method for the transfer of flat bags (3), in particular filled double-chamber tea bags located in a heat-sealed surrounding package, from a two-track processing means to a single-track further processing means, in which the flat bags (3) are offset from each other during two-track processing and alternately transferred to the single-track further processing means, characterised in that the flat bags (3) are positioned on the two tracks (4, 5) of the two-track processing means initially with flat bag tops (7) facing towards each other in an arrangement with transversely parallel longitudinal axes, in that then the flat bags (3) of the two tracks (4, 5) are offset from each other and staggered, and in that finally the flat bags (3) in a combined sliding and pivot movement are transferred from the respective track (4, 5) of the two-track processing means to the single-track further processing means along a centre axis (8) with the flat bag tops (7) facing the same way forwardly in the direction of transport and further processed.

2. Method according to claim 1, characterised in that the flat bags (3) are transported on the two tracks (4, 5) of the two-track processing means at the same processing speed (v₁) and in that then the flat bags (3) of the two tracks (4, 5) are offset from each other and staggered by one division by an acceleration zone (9) engaging the two tracks (4, 5) with an offset.

3. Method according to claim 2, characterised in that the processing speed (v₂) in the acceleration zone (9) is twice as high as the speed of supply (v₁).

4. Method according to any of claims 1 to 3, characterised in that pivoting of the flat bags (3) through 90° is performed.

5. Method according to any of claims 1 to 4, characterised in that the flat bags (3) are adjusted in position before commencing the combined sliding and pivot movement on the two tracks (4, 5).

6. Method according to any of claims 1 to 5, characterised in that, with execution of the sliding and pivot movement, such high acceleration is imparted to the flat bags (3) that the kinetic energy is sufficient to bring the flat bags (3) without further transport means, particularly in a guided relationship, to the subsequent processing station.

7. Method according to any of claims 1 to 6, characterised in that the flat bags (3) in the two-track processing means are transported at a speed v₁ such that in the acceleration zone (9) they are offset from each other at 2 x v₁ and in that the combined sliding and pivot movement is performed only at a speed of rotation of 1/4 of the machine cycle.

8. Method according to any of claims 1 to 7, characterised in that the movement of the flat bags (3) in the single-track further processing zone is assisted with compressed air and/or a mechanical transport aid.

9. Apparatus for carrying out the method according to any of claims 1 to 8 with a transport device with two tracks (4, 5) as a sorting zone for the flat bags (3) and a single-track further processing means as well as a transfer device arranged between them, characterised in that on each track (4, 5) is arranged coaxially a device for offsetting the flat bags (3) on the tracks (4, 5) from each other and in that adjoining this is provided a transfer device (13) for each track (4, 5) for combined sliding and pivoting of the flat bags (3) into a centre position with a centre axis (8).

10. Apparatus according to claim 9, characterised in that the offsetting device consists of at least one toothed belt (10, 11) or the like bag-carrying transport means arranged on each track (4, 5), in that the toothed belts (10, 11) are driven approximately twice as fast as the two-track transport device mounted in front in order to form an acceleration zone (9) and in that the toothed belts (10, 11) of the two tracks (4, 5), offset from each other by one division, grip the flat bags (3).

11. Apparatus according to claim 10, characterised in that the toothed belts (10, 11) or the like bag-carrying transport means are equipped with bag-gripping drivers (12).

12. Apparatus according to claims 10 and 11, characterised by two toothed belts (10, 11) for each track (4, 5), which are arranged in such a way as to form a bag support, wherein they are provided with vertical driver projections (12) for gripping the flat bags (3).

13. Apparatus according to any of claims 10 to 12, characterised by a stop (15) at the end of the acceleration zone for adjusting the position of the flat bags (3) before commencing the combined sliding and pivot movement, which can be pivoted away downwards out of the path of movement of the device (13) for combined sliding and pivoting.

14. Apparatus according to any of claims 9 to 13, characterised in that the device (13) for combined sliding and pivoting consists of two in each case two-armed counterdriven rotors (16, 17) whose aims engage in each other and at their outer ends are provided with a flat bag receptacle in which the flat bag (3) supplied is held and can be released again after the combined sliding and pivot movement.

15. Apparatus according to claim 14, characterised in that the rotors (16, 17) are arranged slightly above a rotor table (14) which is located in the plane of bag transport, wherein a common rotor drive which is coupled to the machine main drive is provided.

16. Apparatus according to claim 14 or 15, characterised in that the flat bag receptacle at each outer end of each rotor arm (18, 19) consists of a pivotably attached L-angle piece (21) with four driver pins (22) for gripping the outer and rear sides of the flat bag (3), wherein pivotably attached to the arm of the L-angle piece (21) which grips the rear side is a push rod (23) which is connected by a rocker (24) and a cam roller (25) to a cam disc (28) of the rotor (16, 17) for obtaining parallel guiding of the drivers.

17. Apparatus according to claim 16, characterised in that the parallel guiding extends from about 15° before to 15° after the axis centre of the rotors (16, 17).

18. Apparatus according to any of claims 9 to 17, characterised in that a shaft guide (29) is provided for further transport of the flat bags (3), preferably to a packing station.

19. Apparatus according to claim 18, characterised by a compressed air device as an additional transport aid.

20. Apparatus according to claim 18 or 19, characterised in that below the shaft (29) is provided an additional mechanical transport unit.

21. Apparatus according to one of the claims 17 to 20, characterised in that above the shaft (29) is provided a guide (30) which consists of parallel running webs which in the upper region are bent towards the incoming flat bags (3).

## Revendications

1. Procédé de transfert de sachets plats (3), notamment des sachets à deux compartiments remplis de thé qui sont placés dans un emballage thermoscellé, d'une ligne de traitement à deux voies vers une ligne de traitement subséquent à une voie, dans lequel les sachets plats (3), lorsqu'ils sont sur la ligne de traitement à deux voies, sont en décalage les uns par rapport aux autres et sont transférés en alternance sur la ligne de traitement à une voie, caractérisé en ce que les sachets plats (3) qui se trouvent sur les deux voies (4, 5) de la ligne de traitement à deux voies sont d'abord dans une disposition dans laquelle ils sont opposés par leurs têtes (7) en ayant leurs axes longitudinaux et transversaux parallèles, en ce que, ensuite, les sachets plats (3) des deux voies (4, 5) sont décalés et mis en quinconce les uns par rapport aux autres et en ce que, enfin, les sachets plats (3) sont transférés, dans un mouvement combiné de déplacement et de pivotement, de la voie (4, 5) de la ligne de traitement à deux voies sur laquelle ils se trouvent vers la ligne de traitement à une ligne, et ce, selon un axe médian (8) et avec toutes les têtes de sachets plats (7) orientées dans le même sens vers l'avant dans la direction de transport, et subissent le traitement subséquent.

2. Procédé selon la revendication 1, caractérisé en ce que les sachets plats (3) sont transportés à la même vitesse de traitement (v₁) sur les deux voies (4, 5) de la ligne de traitement à deux voies et en ce que, ensuite, les sachets plats (3) des deux voies (4, 5) sont mis en quinconce en étant décalés d'un intervalle les uns par rapport aux autres au moyen d'une section d'accélération (9) qui entre en action au niveau des deux voies (4, 5) de manière décalée.

3. Procédé selon la revendication 2, caractérisé en ce que la vitesse de transport (v₂) dans la section d'accélération (9) est réglée au double de la vitesse de livraison (v₁).

4. Procédé selon l'une des revendications 1 à 3, caractérisé en ce qu'un pivotement des sachets plats (3) de 90° est effectué.

5. Procédé selon l'une des revendications 1 à 4, caractérisé en ce que la position des sachets plats (3) est ajustée sur les deux voies (4, 5) avant le commencement du mouvement combiné de déplacement et de pivotement.

6. Procédé selon l'une des revendications 1 à 5, caractérisé en ce que, en effectuant le mouvement de déplacement et de pivotement, une accélération d'un niveau tel est communiquée aux sachets plats (3) que l'énergie cinétique suffit pour transférer les sachets plats (3) sans autre moyen de transport, notamment guidé, jusqu'au poste de traitement suivant.

7. Procédé selon l'une des revendications 1 à 6, caractérisé en ce que les sachets plats (3) sont transportés à une vitesse v₁ dans la ligne de traitement à deux voies, en ce qu'ils sont décalés les uns par rapport aux autres dans la section d'accélération (9) à une vitesse égale à 2 x v₁, et en ce que le mouvement combiné de déplacement et de pivotement n'est effectué qu'à une vitesse de rotation égale au quart de la cadence de la machine.

8. Procédé selon l'une des revendications 1 à 7, caractérisé en ce que le déplacement des sachets plats (3) dans la ligne de traitement subséquent à une voie est réalisé à l'aide d'air comprimé et/ou d'un auxiliaire de transport mécanique.

9. Dispositif de mise en oeuvre du procédé selon l'une des revendications 1 à 8, comportant un dispositif de transport comprenant deux voies (4, 5) et servant de section de triage des sachets plats (3), une ligne de traitement subséquent à une voie, ainsi qu'un dispositif de transfert disposé entre ces derniers, caractérisé en ce qu'un dispositif servant à décaler les sachets plats (3) sur les voies (4, 5) les uns par rapport aux autres est disposé de manière coaxiale au niveau de chaque voie (4, 5), et en ce qu'il est prévu, pour chaque voie (4, 5), un dispositif de transfert (13) qui se raccorde au précédent dispositif et qui sert, de façon combinée, à déplacer et à faire pivoter les sachets plats (3) jusqu'à ce qu'ils atteignent une position médiane comportant un axe médian (8).

10. Dispositif selon la revendication 9, caractérisé en ce que le dispositif servant à décaler comprend au moins une courroie crantée (10, 11) ou un moyen de transport de sachets analogue disposés au niveau de chaque voie (4, 5), en ce que les courroies crantées (10, 11) sont entraînées à une vitesse à peu près deux fois plus rapide que le dispositif de transport à deux voies disposé en amont, et ce, afin de constituer une section d'accélération (9), et en ce que les courroies crantées (10, 11) des deux voies (4, 5) saisissent les sachets plats (3) avec un décalage d'un intervalle l'une par rapport à l'autre.

11. Dispositif selon la revendication 10, caractérisé en ce que les courroies crantées (10, 11) ou le moyen de transport de sachets analogue sont munis de poussoirs de saisie de sachet (12).

12. Dispositif selon les revendications 10 et 11, caractérisé en ce que, pour chacune des voies (4, 5), deux courroies crantées (10, 11) sont disposées de manière à former un support pour sachets et sont pourvues d'ergots d'entraînement dressés vers le haut (12) et destinés à saisir les sachets plats (3).

13. Dispositif selon l'une des revendications 10 à 12, caractérisé par une butée (15) située au bout de la section d'accélération et destinée à ajuster la position des sachets plats (3) avant le commencement du mouvement combiné de déplacement et de pivotement, et qui peut s'effacer, en basculant vers le bas, de la trajectoire du dispositif (13) de déplacement et de pivotement combinés.

14. Dispositif selon l'une des revendications 9 à 13, caractérisé en ce que le dispositif (13) de déplacement et de pivotement combinés comprend deux rotors (16, 17) qui possèdent chacun deux bras et sont entraînés dans des sens opposés, et dont les bras s'engrènent et sont munis à leurs extrémités extérieures d'un organe de réception de sachet plat grâce auquel le sachet plat (3) délivré est maintenu et peut à nouveau être libéré après le mouvement combiné de déplacement et de pivotement.

15. Dispositif selon la revendication 14, caractérisé en ce que les rotors (16, 17) sont disposés légèrement au-dessus d'une table pour rotors (14) qui se trouve dans le plan de transport des sachets, un entraînement commun des rotors, couplé à l'entraînement principal de la machine, étant prévu.

16. Dispositif selon la revendication 14 ou 15, caractérisé en ce que l'organe de réception de sachet plat situé à chaque extrémité extérieure de chacun des bras de rotor (18, 19) consiste en une pièce coudée en L (21), fixée de manière articulée et rotative, comportant quatre broches d'entraînement (22) destinées à saisir les côtés extérieur et arrière du sachet plat (3), un levier de commande (23) étant fixé de manière articulée à la branche de la pièce coudée en L (21) qui saisit le côté arrière et étant relié, par l'intermédiaire d'une bielle oscillante (24) et d'un galet de courbe (25), à une came (28) du rotor (16, 17) afin de réaliser un mouvement parallèle des entraîneurs.

17. Dispositif selon la revendication 16, caractérisé en ce que le mouvement parallèle s'étend depuis environ 15° avant le centre d'axe des rotors (16, 17) jusqu'à environ 15° après.

18. Dispositif selon l'une des revendications 9 à 17, caractérisé en ce qu'il est prévu une glissière sous forme de puits (29) pour la poursuite du transport des sachets plats (3), de préférence jusqu'à un poste d'emballage.

19. Dispositif selon la revendication 18, caractérisé par un dispositif à air comprimé servant d'auxiliaire de transport supplémentaire.

20. Dispositif selon la revendication 18 ou 19, caractérisé en ce qu'il est prévu un dispositif de transport mécanique supplémentaire au-dessous du puits (29).

21. Dispositif selon l'une des revendications 17 à 20, caractérisé en ce qu'il est prévu, au-dessus du puits (29), un guide (30) constitué de barrettes parallèles qui sont recourbées, dans leur partie supérieure, a l'encontre des sachets plats délivrés (3).
